# EUROPÄISCHE PATENTSCHRIFT

(11) **EP 4 269 510 B1**
(45) Veröffentlichungstag und Bekanntmachung des Hinweises auf die Patenterteilung: **28.01.2026**
(21) Anmeldenummer: 23166612.4
(22) Anmeldetag: 04.04.2023
(51) Int. Cl.: C09D 11/037, C09D 11/322, C09D 11/52, C09D 11/14

(54) **MAGNEISIERBARE TINTE FÜR DIE FUNKTIONALISIERUNG VON OBERFLÄCHEN**
MAGNETISABLE INK FOR FUNCTIONALISING SURFACES
ENCRE MAGNÉTISABLE POUR LA FONCTIONALISATION DE SURFACES

(30) Priorität: 28.04.2022 DE 102022204119
(43) Veröffentlichungstag der Anmeldung: 01.11.2023
(73) Patentinhaber: ContiTech Deutschland GmbH, 30175 Hannover (DE)
(72) Erfinder: Kneer, Janosch, 30165 Hannover (DE); Schleuniger, Juerg, 30165 Hannover (DE); Kegel, Isabell, 30165 Hannover (DE)
(74) Vertreter: Preusser, Andrea

(56) Entgegenhaltungen:
- KR-B1- 102 310 785
- US-A1- 2014 308 490
- US-A1- 2015 053 112
- US-A1- 2022 016 637

## Beschreibung

Die vorliegende Erfindung betriff eine magnetisierbare Tinte zur Funktionalisierung von Oberflächen, einen Kunststoffformkörper, umfassend mindestens eine mit dieser magnetisierbaren Tinte funktionalisierte Oberfläche, ein Verfahren zur Herstellung eines solchen Kunststoffformkörpers, die Verwendung einer solchen magnetisierbaren Tinte zur Funktionalisierung von Oberflächen und die Verwendung eines solchen Kunststoffformkörpers als Komponente in einem Automobil.

Die Funktionalisierung, insbesondere die Magnetisierung von Oberflächen spielt in der modernen Industrie bei der Herstellung von Bauteilen und Formkörpern eine herausragende Rolle.

Eine Anwendung, bei der magnetische Flüssigkeiten in Form von Tinte verwendet werden, ist die Datenspeicherung auf Magnetbändern, bei der magnetische Partikel auf Bänder aufgetragen werden und die magnetische Ausrichtung als Datenelemente ausgelesen wird, wie dies beispielsweise in der Publikation Magnetic Tape Production and Coating Techniques, Donald F. Eldridge, Memorex Monograph No 4, beschrieben wird.

Damit verwandt ist die frühere MICR-Code-Technik zur Bearbeitung von Bankschecks, wie dies in der Publikation "Position and Level Sensing Using Hall-Effect Sensing Technology", Gary Pepka, Allegro Microsystems, beschrieben wird.

Die US 2022/016637 betrifft Zusammensetzungen die Substrate umfassen, welche polymere Materialien oder nichtmagnetische, paramagnetische oder diamagnetische Metallobjekte enthalten, sowie Filme oder Tinten, die ferromagnetische Materialien enthalten, wobei die Filme oder die ferromagnetischen Materialien transparent sind.

Die KR 102310785 B betrifft einen Kern, in dem magnetische Partikel durch einen Harz- oder Metalloxidvorläufer aggregiert sind und eine anorganische Hülle, die mindestens einen Teil der Oberfläche des Kerns bedeckt, wobei der Kern ein hartmagnetisches Partikel für Sicherheitstinte ist.

Die US 2014/308490 betrifft eine magnetisierbare Tinte die mindestens 65 % magnetisierbare Teilchen, mit einem modalen Durchmesser zwischen 3 µm und 10 µm, enthält.

Die US 2015/053112 betriff ein Tintenstrahldrucksystem umfassend einen Tintenbehälter, einen Tintendurchgang, eine Tintenstrahldüse und eine Vielzahl von magnetischen Elementen, die sich in der Nähe des Tintenbehälters und/oder des Tintendurchgangs befinden.

Betrachtet man die Signalisierung als Funktionalität, d.h. die Fähigkeit eines technischen Bauteils oder einer Oberfläche, ein magnetisches Signal zu erzeugen und abzugeben, das von einem Antwortgeber oder Sensor, wie z.B. einem Hall-Sensor, erfasst und genutzt werden kann, so werden typischerweise kleine Magnetelemente stückweise und sequentiell in das Bauteil eingebracht oder auf eine Oberfläche aufgebracht. Typische Beispiele sind Positions- oder Näherungsbestimmungen in mechanischen Elementen mit beweglichen Teilen wie Motoren, Getrieben oder Ventilen.

Um die magnetische Signalfunktionalität zu ermöglichen, d. h. ein Bauteil oder eine Oberfläche durch Hinzufügen magnetischer Eigenschaften zu funktionalisieren, müssen in der Regel sperrige, pad-, scheiben-, platten- oder kabelförmige Elemente oder Strukturen stückweise, einzeln und nacheinander platziert oder eingefügt werden.

Ein solches Verfahren ist zeitaufwändig, erfordert manuellen Aufwand und bei der Installation und Integration muss Platz eingeplant und berücksichtigt werden.

Darüber hinaus müssen die magnetischen Elemente entweder aus bestehenden, begrenzten Formen und Geometrien ausgewählt oder speziell und individuell angefertigt werden, was zusätzliche Kosten und Zeitaufwand bedeutet.

Bei größeren, nicht ebenen Flächen, die magnetisch funktionalisiert werden sollen, ist ein solches stückweises, sequentielles Anbringen von Magneten erst recht ineffizient oder sogar unpraktisch oder unmöglich.

Es war daher die Aufgabe der vorliegenden Erfindung diese Nachteile des Stands der Technik zu beheben und insbesondere die Grenzen und Beschränkungen, die stückweise magnetische Elemente aufweisen, was die begrenzte Form, den großen Integrationsaufwand und die Kosten, die Sperrigkeit und das Volumen und damit den von den Magnetelementen beanspruchten Raum betrifft, zu überwinden. Insbesondere für größere Bauteile oder Oberflächen, die magnetisierbar funktionalisiert werden müssen, soll eine wirtschaftlich vertretbare Methode zur Magnetisierung solcher Oberflächen bereitgestellt werden.

Diese Aufgabe soll insbesondere durch das Bereitstellen einer magnetisierbaren Tinte gelöst werden.

Um als Funktionsschicht zu dienen und stückweise integrierte Elemente zu ersetzen, sollte die magnetisierbare Tinte zum einen eine geeignete Verarbeitbarkeit für das Drucken und Gießen von Filmen oder Schichten in verschiedenen Techniken und zum anderen eine einfache Aushärtung/Nachbehandlung dieser Filme und Schichten durch thermische Behandlung bei moderaten Temperaturen (unter 120°C), die mit elastomeren Substraten und Komponenten kompatibel sind, ermöglichen.

Um als eine solche signalgebende, magnetisierbare Schicht zu dienen, sollten die Schichten eine gute Haftung und Flexibilität auf typischen Polymersubstraten aufweisen, insbesondere wird eine hohe Haftung und Flexibilität auf TPU angestrebt.

Diese Aufgabe wurde überraschend durch eine Flüssigkeit, die gedruckt werden kann, d. h. eine Tinte oder Paste, die aus funktionellen Komponenten und Additiven besteht, gelöst. Die wichtigsten funktionellen Komponenten sind ein magnetisierbares Material und Komponenten zur Erzielung geeigneter morphologischer Eigenschaften und Grenzflächeneigenschaften der resultierenden Schicht, um eine gute Haftung auf thermoplastischen Elastomersubstraten, insbesondere TPU, und eine gute Flexibilität der Schicht zu gewährleisten, damit sie auf nicht ebenen starren Oberflächen oder ebenen Oberflächen, die jedoch flexibel und biegsam sind, aufgebracht werden kann.

Insbesondere wird diese Aufgabe durch eine magnetisierbare Tinte gemäß Anspruch 1 gelöst, also durch eine magnetisierbare Tinte zur Funktionalisierung von Oberflächen, umfassend mindestens ein magnetisierbares Material, mindestens ein Lösemittel und mindestens ein Bindemittel,und das magnetisierbare Material magnetisierbare Mikropartikel und/oder Nanopartikel umfasst, dadurch gekennzeichnet, dass die Mikropartikel und/oder Nanopartikel in einer Menge von 40 bis 50 Gew.-% in der magnetisierbaren Tinte enthalten sind, wobei die Mikropartikel und/oder Nanopartikel flockig sind.

Vorteilhafte Weiterbildungen sind in den Unteransprüchen beschrieben.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Es versteht sich auch, dass, obwohl die Begriffe "erstes", "zweites" usw. hier zur Beschreibung verschiedener Elemente, insbesondere verschiedener Schichten, verwendet werden können, diese Elemente durch diese Begriffe nicht eingeschränkt werden sollen. Diese Begriffe werden nur verwendet, um ein Element von einem anderen zu unterscheiden. Zum Beispiel könnte ein erstes Objekt oder ein erster Schritt als zweites Objekt oder zweiter Schritt bezeichnet werden, und in ähnlicher Weise könnte ein zweites Objekt oder ein zweiter Schritt als erstes Objekt oder erster Schritt bezeichnet werden. Das erste Objekt bzw. der erste Schritt und das zweite Objekt bzw. der zweite Schritt sind beide Objekte bzw. Schritte, aber sie sind nicht als dasselbe Objekt bzw. derselbe Schritt zu betrachten.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Unter "Mikropartikel" werden hier allgemein Partikel mit einer mittleren Partikelgröße (D50) von 1 bis 999 µm verstanden. Unter Nanopartikel werden allgemein Partikel mit mittlerer Partikelgröße 1 bis 999 nm.

Die mittlere Partikelgröße kann dabei mittels Laserbeugungsmethode gemäß ISO 13320-1 (2020-1) bestimmt werden.

Der Begriff Tinte umfasst auch Pasten. Die Viskosität der Tinte kann zwischen 1 und 10000 mPa*s sein (DIN 53019-1:2008-09, DIN 53019-2:2001-02, DIN 53019-3:2008-09).

Als Material für die magnetisierbaren Partikel kommt u.a. Nickel, Eisen sowie magnetisierbare Legierungen wie Neodym-Eisen-Bor (Nd₂Fe₁₄B) zum Einsatz.

Bevorzugt umfasst das magnetisierbare Material Nickel.

Neben dem Nickel, Eisen sowie magnetisierbare Legierungen wie Neodym-Eisen-Bor (Nd₂Fe₁₄B), können jedoch auch noch weitere magnetisierbare Materialien, wie Cobalt und weitere Legierungen, insbesondere dieser Materialien, enthalten sein.

Das magnetisierbare Material wird in Form von Mikropartikel und/oder Nanopartikel in die Formulierung eingebracht. Die Mikropartikel und/oder Nanopartikel können unterschiedliche Größen und Formen aufweisen. Erfindungsgemäß sind die Partikel flockig.

In einer bevorzugten Ausführungsform weisen die Mikropartikel, insbesondere Nickel-Mikropartikel, eine mittlere Partikelgröße von 1,5 bis 15 µm auf.

Vorzugsweise weisen die Mikropartikel, insbesondere Nickel-Mikropartikel, eine mittlere Partikelgröße von 2,2 bis 3 µm oder von 3 bis 7 µm, auf.

In einer nicht erfindungsgemäßen Ausführungsform sind auch kugelförmige oder ellipsoide Mikropartikel und/oder Nanopartikel geeignet, insbesondere Nickel-Mikropartikel, insbesondere mit Partikelgrößen von 2,2 bis 3 µm oder von 3 bis 7 µm oder von 5 bis 15 µm, wobei sich die Größe bei ellipsoiden Mikropartikeln und/oder Nanopartikeln, insbesondere Nickel-Mikropartikeln, jeweils auf die größte Ausdehnung des Partikels bezieht.

Erfindungsgemäß geeignet sind Flocken, insbesondere Nickel-Flocken, mit einem mittleren Durchmesser von 1 bis 3 µm, vorzugsweise von etwa 1,5 µm.

Je nach Morphologie können unterschiedliche magnetische Eigenschaften (z.B. Magnetfeldstärke) erreicht werden. Tinte mit flockigen Partikeln ermöglicht Schichten mit höherer magnetischer Feldstärke normiert auf die Schichtdicke (H [Gauss] pro Dicke [µm])

Die Partikelgrößen werden dabei jeweils gemäß ISO 13320-1 (2020-01) bestimmt

Das mindestens eine Lösemittel ist prinzipiell nicht beschränkt. Insbesondere ist das Lösemittel nicht auf solche Mittel beschränkt, die alle Bindemittel und Additive der magnetisierbaren Tinte lösen kann. Die magnetisierbare Tinte kann demnach als Lösung, Dispersion bzw. Suspension vorliegen.

In einer bevorzugten Ausführungsform umfasst das mindestens eine Lösemittel Ethylacetat, Propylacetat, Wasser und/oder Ethyl-3-ethoxypropionat.

Besonders bevorzugt ist der Einsatz von Ethylacetat, da dies für die Erhaltung einer homogenen Morphologie und Topographie der Schicht während der Aushärtung von Vorteil ist.

Das mindestens eine Bindemittel ist prinzipiell nicht beschränkt, sondern umfasst alle dem Fachmann als geeignet bekannten Bindemittel, die insbesondere dazu geeignet sind magnetisierbares Material auf verschiedensten Kunststoffen zu binden. Das Bindemittel kann auch ein reaktives 2-Komponenten bzw. Mehrkomponenten-System umfassen.

Vorzugsweise umfasst das mindestens eine Bindemittel Nitrocellulose.

Besonders bevorzugt ist er Einsatz von Nitrocellulose, da resultierende Schichten gute Kratz und Scheuerfestigkeit besitzen und gleichzeitig eine mechanische Flexibilität.

Die magnetisierbare Tinte kann ferner vorzugsweise mindestens ein Additiv, ausgewählt aus Rheologiemodifikatoren, Entlüftern, Entschäumern, Additive zur Verbesserung der drucktechnischen Herstellungs- und späteren optischen Schichteigenschaften, umfassen.

Erfindungsgemäß sind die Mikropartikel und/oder Nanopartikel, insbesondere die Nickel-Mikropartikel, in einer Menge von 40 bis 50 Gew.-% in der magnetisierbaren Tinte enthalten (bezogen auf das Gesamtgewicht der magnetisierbaren Tinte).

Dies resultiert vorzugsweise in einer Schicht mit einem bevorzugten Anteil von 75 bis 95 Gew.-%, vorzugsweise von 75 Gew.-% bis 85 Gew.-% an Mikropartikel und/oder Nanopartikel, insbesondere an Nickel-Mikropartikeln (bezogen auf das Gesamtgewicht der Schicht).

Solche Mengen haben den Vorteil, einer höheren resultierenden magnetischen Feldstärke normiert auf die Schichtdicke.

In ein bevorzugten Ausführungsform ist das Bindemittel in einer Menge von 3,5. bis 12 Gew.-%, vorzugsweise von 10 bis 12 Gew.-% in der magnetisierbaren Tinte enthalten (bezogen auf das Gesamtgewicht der magnetisierbaren Tinte).

Solche Mengen haben den Vorteil, einer gute resultierenden Schichtmorphologie, d.h. gute mechanische Eigenschaften, wie Haftung und Flexibilität und gute magnetische Eigenschaften, wie eine hohe Magnetfeldstärke.

Die vorliegende Erfindung betrifft ferner einen Kunststoffformkörper, umfassend mindestens eine Oberfläche, dadurch gekennzeichnet, dass die mindestens eine Oberfläche mit einer magnetisierbaren Tinte wie vorstehend definiert, funktionalisiert ist.

Alle vorstehend für die magnetisierbare Tinte aufgeführten Definitionen und bevorzugten Ausführungsformen gelten analog für den erfindungsgemäßen Kunststoffformkörper.

Der Kunststoffformkörper ist hierbei nicht beschränkt, sondern kann alle möglichen Größen und Formen aufweisen. Der Kunststoffformkörper kann auch eine Kunststofffolie darstellen.

Auch die Größe und Form der Oberfläche die funktionalisiert wird ist nicht beschränkt.

Vorzugsweise umfasst der Kunststoffformkörper einen thermoplastischen Kunststoff oder ein Elastomer, insbesondere ein thermoplastisches Elastomer,
Kunststoffe sind in der Regel Stoffe, deren Grundbestandteile synthetisch oder halbsynthetisch erzeugte Polymere vorzugsweise mit organischen Gruppen sind.

Elastomere sind in der Regel Polymere mit gummielastischem Verhalten, die bei 20 °C wiederholt mindestens auf das Zweifache ihrer Länge gedehnt werden können und nach Aufhebung des für die Dehnung erforderlichen Zwanges sofort wieder annähernd ihre Ausgangsdimensionen einnehmen. Elastomere sind weitmaschige, in der Regel vernetzte, hochpolymere Werkstoffe, die bei der Gebrauchstemperatur aufgrund der Verknüpfung der einzelnen Polymerketten an den Vernetzungsstellen nicht viskos fließen können.

Elastomere werden im Allgemeinen durch Vulkanisation von natürlichen Kautschuken (Naturkautschuken) und synthetischen Kautschuken (Synthesekautschuken) hergestellt. Unter Vulkanisation versteht man die Überführung von plastischen, kautschukartigen, ungesättigten oder gesättigten Polymeren in den gummielastischen Zustand, vorzugsweise durch Vernetzung mit Schwefel bzw. Schwefelverbindungen. Dabei werden die einzelnen Polymerketten irreversibel durch kovalente Bindungen miteinander verbunden.

Bei manchen Synthesekautschuken werden auch schwefelfreie Vernetzer als Vulkanisationsmittel verwendet, wie z. B. Peroxide, Harze, Bisphenole, Metalloxide (MgO, ZnO). Zudem gibt es auch rein physikalische Methoden der Vernetzung (z.B. mittels energiereicher Strahlung).

Thermoplastische Elastomere sind in der Regel Stoffe, die sich bei Raumtemperatur vergleichbar den klassischen Elastomeren verhalten, sich jedoch unter Wärmezufuhr plastisch verformen lassen und somit ein thermoplastisches Verhalten zeigen. Thermoplastische Elastomere weisen im Idealfall eine Kombination der Gebrauchseigenschaften von Elastomeren und den Verarbeitungseigenschaften von Thermoplasten auf. Dies kann dadurch erreicht werden, dass in den Makromolekülen der entsprechenden Kunststoffe gleichzeitig weiche und elastische Komponenten mit hoher Dehnbarkeit und niedriger Glasübergangstemperatur sowie harte, kristallisierbare Segmente mit geringer Dehnbarkeit und hoher Glasübergangstemperatur auftreten (physikalische Vernetzung). Die Weich- und Hartsegmente müssen miteinander unverträglich sein und als individuelle Phasen vorliegen. Das kann erreicht werden, indem weiche Elastomerpartikel in einer harten Polymermatrix eingelagert werden oder indem Blockcopolymere mit unverträglichen harten und weichen Segmenten eingesetzt werden. Kennzeichnend für thermoplastische Elastomere sind somit Vernetzungsstellen, die durch Erwärmen reversibel spaltbar sind. Oberhalb der entsprechenden Temperatur verhalten sich die Polymere wie Thermoplaste, unterhalb wie Elastomere. Damit entspricht das Gebrauchsverhalten demjenigen von Elastomeren und das Verarbeitungsverhalten demjenigen von Thermoplasten.

Der in dem erfindungsgemäßen Kunststoffformkörper eingesetzte Kunststoff ist im Wesentlichen nicht beschränkt.

Es ist jedoch bevorzugt, wenn der mindestens eine Kunststoff ausgewählt ist aus der Gruppe bestehend aus Polyethylen, ultrahochmolekularem Polyethylen (UPE), Polypropylen, Polyamid, Polyester, aromatische Polyester, Polyvinylchlorid, Polyethersulfon, Polyetheretherketon (PEEK), Ethylen-Tetrafluorethylen (ETFE), chlorierte Fluorkunststoffe (PCTFE, ECTFE),Tetrafluorethylen-Hexafluorpropylen-Vinylidenfluorid-Terpolymer (THV), Polyvinylidenfluorid (PVF), Polyvinylidendifluorid (PVDF), Perfluoralkoxy-Polymer (MFA + PFA), Tetrafluorethylen-Hexafluorpropylen-Copolymer (FEP), Polytetrafluorethylen (PTFE), sowie Mischungen und Copolymeren davon. Die Kunststoffe können zudem weitere Zusatzstoffe enthalten (z.B. Antistatika, Färbemittel, Geruchsabsorber, Haftvermittler, usw.).

Das in dem erfindungsgemäßen Kunststoffformkörper eingesetzte Elastomer ist im Wesentlichen nicht beschränkt. Es ist jedoch bevorzugt, wenn das mindestens eine Elastomer ausgewählt ist aus der Gruppe bestehend aus Acrylatkautschuken (AEM), Ethylen-Vinylacetat-Kautschuken (EVA), Polybutadien (BR), Chlorsulfoniertes Polyethylen (CSM), Chloriertes Polyethylen (CM), Epichlorhydrin-Kautschuken (ECO), Chloroprenkautschuken (CR), Polyisopren (IR), Fluorkautschuk (FPM, FKM, FFKM), Styrol-Butadien-Kautschuken (SBR), Isobutylen-Isopren-Kautschuken (IIR), halogenierten Isobutylen-Isopren-Kautschuken (CIIR + BIIR), Acrylnitril-Butadien-Kautschuken (NBR), teilhydrierten oder vollständig hydrierten Acrylnitrilbutadien-Kautschuken (HNBR), Verschnitte aus NBR mit PVC (NBR-PVC), teihydrierten oder vollständig hydrierten carboxylierten Acrylnitrilbutadien-Kautschuken, Ethylen-Propylen-Dien-Kautschuken (EPDM), Ethylen-Propylen- Kautschuken (EPM), Naturkautschuk (NR), bromierten Isobutylen-Paramethylstyrol-Kautschuken, Silikonkautschuken (MVQ), sowie Mischungen, Verschnitte und Copolymeren davon.

Das in dem erfindungsgemäßen Kunststoffformkörper eingesetzte thermoplastische Elastomer ist im Wesentlichen nicht beschränkt. Es ist jedoch bevorzugt, wenn das mindestens eine thermoplastische Elastomer ausgewählt ist aus der Gruppe bestehend aus thermoplasischen Copolyamid (TPA-A), thermoplastischen Polyesterelastomer (TPE-E), Thermoplastische Elastomere auf Olefinbasis (TPE-O), Styrol-Blockcopolymere (TPE-S), Thermoplastische Elastomere auf Urethanbasis (TPE-U bzw. TPU), Thermoplastische Vulkanisate oder vernetzte thermoplastische Elastomere auf Olefinbasis (TPE-V).

Das mindestens eine Elastomer umfasst besonders bevorzugt Ethylen-Propylen-Dien-Kautschuke (EPDM), Acrylnitril-Butadien-Kautschuken (NBR), Naturkautschuk (NR), Isobutylen-Isopren-Kautschuken (IIR) und/oder halogenierten Isobutylen-Isopren- Kautschuken (CIIR bzw. BIIR), sowie Mischungen, Verschnitte und Copolymere davon.

Der mindestens eine Kunststoff umfasst besonders bevorzugt Polyethylen (PE), ultrahochmolekulares Polyethylen (UPE), Tetrafluorethylen-Hexafluorpropylen-Vinylidenfluorid-Terpolymer (THV), Polyvinylidendifluorid (PVDF) und/oder Tetrafluorethylen-Hexafluorpropylen-Copolymer (FEP), sowie Mischungen und Copolymere davon.

Besonders bevorzugt umfasst der Kunststoff ein thermoplastisches Polyurethan, insbesondere ein thermoplastisches Polyurethanelastomer.

Besonders bevorzugte thermoplastische Polyurethanelastomere umfassen beispielsweise Produkte der Dupont Intexar Serie oder der Covestro Platilon Serie.

In einer bevorzugen Ausführungsform umfasst der Kunststoffformkörper eine Kunststofffolie, wobei mindestens eine Oberfläche der Kunststofffolie mit der magnetisierbaren Tinte funktionalisiert ist.

Stellt der Kunststoffformkörper eine Kunststofffolie dar, so ist vorzugsweise mindesten eine der größten Oberflächen der Kunststofffolie die Oberfläche, die funktionalisiert wird.

In einer bevorzugen Ausführungsform umfasst der Kunststoffformkörper einen Kunststoffformkörper, der durch Faltung oder Aufrollen des Kunststoffformkörpers, insbesondere einer Kunststofffolie, wobei mindestens eine Oberfläche des Kunststoffformkörpers, insbesondere der Kunststofffolie funktionalisiert ist oder durch Aufeinanderstapelung mehrerer Kunststoffformkörpern, insbesondere mehrerer Kunststofffolien, wobei mindestens eine Oberfläche der jeweiligen Kunststoffformkörper, insbesondere der Kunststofffolien funktionalisiert sind, ein Kunststoffformkörper, umfassend mehrere Lagen der magnetisierbaren Tinte entsteht.

Was die magnetischen Eigenschaften anbelangt, so ist die Magnetfeldstärke oder der Magnetfluss an den Kanten proportional zur Dicke der gedruckten Elemente und Schichten und kann daher so eingestellt werden, dass die Signalfunktionalität an die jeweiligen Anforderungen eines Abfragegeräts, eines Sensors wie eines Hall- oder magnetoresistiven (GMR=) Sensors oder anderer Detektortypen angepasst wird. Die magnetischen Eigenschaften der gedruckten Elemente oder Schichten können proportional erhöht werden, indem magnetische Schichten oder ausgeschnittene Elemente übereinandergestapelt bzw. aufeinandergestapelt werden oder die flexiblen Eigenschaften genutzt werden, indem Schichten gefaltet werden. Auch spulen- oder rollenförmige oder zylindrische, dreidimensionale magnetische Elemente können hergestellt werden.

Der Kunststoffformkörper umfasst vorzugsweise eine Komponente in einem Automobil, beispielsweise einen Antriebsriemen oder eine Innenraumkomponente, insbesondere ein Obermaterial, einen Schlauch für gasförmige oder flüssige Medien oder ein Federungs/Dämpfungselement.

Eine solche Innenraumkomponente kann beispielsweise ein Teil eines Sitzes oder Schalthebels aber auch eine Folie zum Beschichten eines Teils einer Innenraumkomponente sein.

Der Kunststoffkörper kann ferner eine Komponente einer industriellen Applikation oder Maschine sein, wie ein Fördergurt, ein Schlauch für gasförmige oder flüssige Medien oder ein Federungs/Dämpfungselement.

Die vorliegende Erfindung betrifft ferner ein Verfahren zur Herstellung eines Kunststoffformkörpers wie vorstehend beschrieben, umfassend das Aufbringen einer Schicht, umfassend oder bestehend aus der magnetisierbaren Tinte wie vorstehend beschrieben auf mindestens eine Oberfläche des Kunststoffformkörpers, wobei
- zunächst eine separate Schicht, umfassend oder bestehend aus der magnetisierbaren Tinte, gebildet wird und diese Schicht als Ganzes auf mindestens eine Oberfläche des Kunststoffformkörpers aufgebracht wird, oder dass
- die Schicht, umfassend oder bestehend aus der magnetisierbaren Tinte, direkt auf mindestens einer Oberfläche des Kunststoffformkörpers gebildet wird,
und die Schicht, umfassend oder bestehend aus der magnetisierbaren Tinte durch thermische Behandlung oder Bestrahlung mit dem Kunststoffformkörper verbunden wird.

Alle vorstehend für die magnetisierbare Tinte und den Kunststoffformkörper aufgeführten Definitionen und bevorzugten Ausführungsformen gelten analog für das erfindungsgemäße Verfahren.

Die separate Schicht, umfassend oder bestehend aus der magnetisierbaren Tinte kann durch verschiedene Drucktechniken hergestellt werden, aber auch gegossen werden.

Das Aufbringen auf mindestens eine Oberfläche des Kunststoffformkörpers kann beispielsweise mit einer typischen Filmauftragsvorrichtung vorgenommen werden.

Es ist jedoch auch das direkte Bedrucken einer Oberfläche des Kunststoffformkörpers mit der magnetisierbaren Tinte möglich.

Bei den gedruckten magnetisierbaren Strukturen bzw. Schichten handelt es sich vorzugsweise nicht um starre Strukturen oder Schichten, sondern um flexible und/oder dehnbare Strukturen oder Schichten, die auch auf nicht planare Oberflächen aufgebracht oder mit flexiblen Elementen wie Elastomerkomponenten verwendet werden können. Die Strukturen oder Schichten sind ferner vorzugsweise nicht spröde und haben eine gute und starke Adhäsion zu dem Kunststoffformkörper.

Die Schichten werden vorzugsweise thermisch nachbehandelt. Die thermische Behandlung kann dem Fachmann bekannte Verfahren wie u.a. Ofentrocknung, Durchlauf/Heißlufttrocknung, Heizplattentrocknung, Infrarotbestrahlung umfassen.

Die thermische Behandlung umfasst vorzugsweise eine Behandlung bei Temperaturen von kleiner als 300°C. Bevorzugt sind Temperaturen kleiner 180°C, insbesondere bevorzugt kleiner 140°C.

Die Bestrahlung umfasst vorzugsweise eine Bestrahlung mit Licht im infraroten Wellenlängenbereich.

Das Verfahren kann ferner den Schritt des Aufeinanderstapelns von Kunststoffformkörpern, insbesondere von Kunststofffolien, wobei mindestens eine Oberfläche der jeweiligen Kunststoffformkörper, insbesondere der Kunststofffolien, mit der magnetisierbaren Tinte funktionalisiert wurden, umfassen.

Das Verfahren kann ferner den Schritt des Faltens oder Aufrollens von Kunststoffformkörpern, insbesondere von Kunststofffolien, wobei mindestens eine Oberfläche der jeweiligen Kunststoffformkörper, insbesondere der Kunststofffolien, mit der magnetisierbaren Tinte funktionalisiert wurden, umfassen.

Die vorliegende Erfindung betrifft ferner einen Kunststoffformkörper erhältlich durch das vorstehend definierte Verfahren.

Die vorliegende Erfindung betrifft ferner die Verwendung einer magnetisierbaren Tinte wie vorstehend beschrieben zur Funktionalisierung von Oberflächen in Automobilen oder Automobilkomponenten, insbesondere von Antriebsriemen, von Obermaterial, von einem Schlauch für gasförmige oder flüssige Medien oder von einem Federungs/Dämpfungselement und/oder Innenraumkomponenten, insbesondere zur Lokalisierung struktureller Defekte, Positionserfassung, Inkrement-Signalisierung und/oder Positionierung.

Eine solche Innenraumkomponente kann beispielsweise ein Teil eines Sitzes oder Schalthebels aber auch eine Folie zum Beschichten eines Teils einer Innenraumkomponente sein.

Die vorliegende Erfindung betrifft ferner die Verwendung einer magnetisierbaren Tinte wie vorstehend beschrieben zur Funktionalisierung von Oberflächen in einer industriellen Applikation oder Maschine, wie einem Fördergurt, einem Schlauch für gasförmige oder flüssige Medien oder einem Federungs/Dämpfungselement.

Die vorliegende Erfindung betrifft ferner die Verwendung eines Kunststoffformkörpers wie vorstehend beschrieben oder erhältlich durch das vorstehend beschriebene Verfahren als Komponente in einem Automobil, insbesondere als Antriebsriemen, als Obermaterial, als Schlauch für gasförmige oder flüssige Medien oder als Federungs/Dämpfungselement und/oder als Innenraumkomponente.

Eine solche Innenraumkomponente kann beispielsweise ein Teil eines Sitzes oder Schalthebels aber auch eine Folie zum Beschichten eines Teils einer Innenraumkomponente sein.

Die vorliegende Erfindung betrifft ferner die Verwendung eines Kunststoffformkörpers wie vorstehend beschrieben oder erhältlich durch das vorstehend beschriebene Verfahren als Komponente einer industriellen Applikation oder Maschine, wie ein Fördergurt, ein Schlauch für gasförmige oder flüssige Medien oder ein Federungs/Dämpfungselement.

Alle vorstehend für die magnetisierbare Tinte und den Kunststoffformkörper aufgeführten Definitionen und bevorzugten Ausführungsformen gelten analog für die jeweiligen erfindungsgemäßen Verwendungen.

Die Erfindung wird nachfolgend anhand nicht beschränkender Beispiele näher erläutert.

### Beispiele

Eine beispielhafte Tinte weist die folgende Zusammensetzung auf:

| Gew% Ni | Gew% Ethylcellulose | Gew% Lösem ittel |
|---|---|---|
| 42,3% | 11,5% | 46,2% |

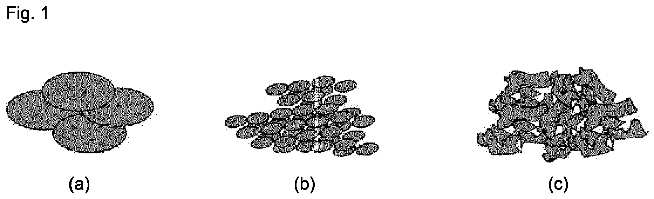

Figur 1 zeigt getestete Nickel-Mikropartikel verschiedener Morphologie schematisch dargestellt.
(a) nicht erfindungsgemäße ellipsoide Partikel mit einem mittleren Partikeldurchmesser von 10 µm.
(b) nicht erfindungsgemäße ellipsoide Partikel mit einem mittleren Partikeldurchmesser von 2,5 µm.
(c) flockige Partikel mit einem mittleren Partikeldurchmesser von 1,5 µm.

Alle gezeigten Nickel-Mikropartikel sind für den Einsatz in der erfindungsgemäßen magnetisierbaren Tinte geeignet und können je nach dem, welche Eigenschaften gewünscht sind, ausgewählt werden.

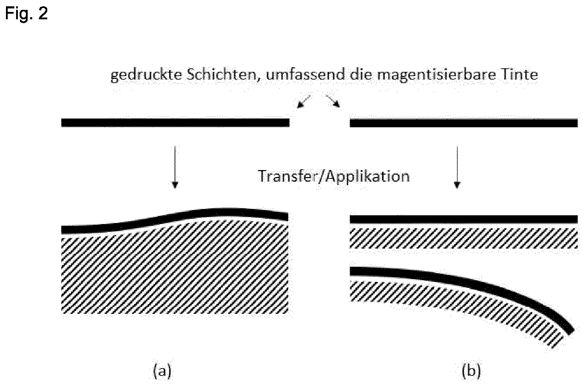

Figur 2 zeigt eine schematische Darstellung des erfindungsgemäßen Verfahrens.

So wird zunächst eine Schicht, umfassend die erfindungsgemäße magnetisierbare Tinte, separat gedruckt. Diese Schicht, umfassend die erfindungsgemäße magnetisierbare Tinte wird anschließend auf eine Oberfläche des Kunststoffformkörpers aufgebracht. Der Oberfläche kann dabei eine nicht-flache Oberfläche sein (a) oder aber die Oberfläche ist eine flache, aber flexible Oberfläche (b).

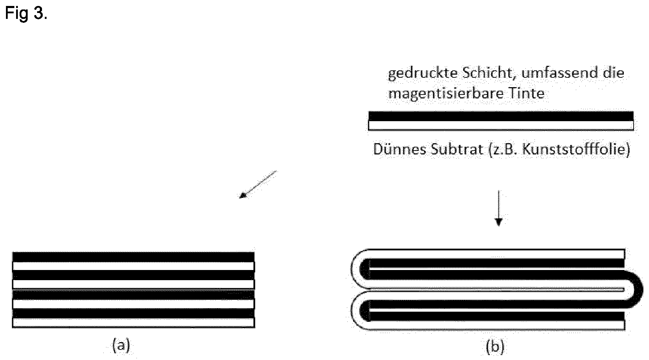

Figur 3 zeigt eine schematische Darstellung eines erfindungsgemäßen Verfahrens zur Herstellung von Kunststoffformkörpern mit mehr als einer Lage der magnetisierbaren Tinte.

So wird zunächst eine Schicht, umfassend die erfindungsgemäße magnetisierbare Tinte, auf ein dünnes Substrat, beispielsweise auf eine Kunststofffolie, aufgebracht. Die so funktionalisierte Kunststofffolie kann nun aufeinandergestapelt werden, um eine gestapelte Struktur (a) zu bilden oder es kann durch Faltung eine gefaltete Struktur (b) gebildet werden. In beiden Fällen weist der erhaltene Formkörper mehr als eine der funktionalisierten Schichten auf.

## Patentansprüche

1. Magnetisierbare Tinte zur Funktionalisierung von Oberflächen, umfassend mindestens ein magnetisierbares Material, mindestens ein Lösemittel und mindestens ein Bindemittel, und das magnetisierbare Material magnetisierbare Mikropartikel und/oder Nanopartikel umfasst, **dadurch gekennzeichnet, dass** die Mikropartikel und/oder Nanopartikel in einer Menge von 40 bis 50 Gew.-% in der magnetisierbaren Tinte enthalten sind, wobei die Mikropartikel und/oder Nanopartikel flockig sind.

2. Magnetisierbare Tinte gemäß Anspruch 1, **dadurch gekennzeichnet, dass** die Mikropartikel eine mittlere Partikelgröße von 1,5 bis 15 µm, vorzugsweise von 2,2 bis 3 µm oder von 3 bis 7 µm, aufweisen.

3. Magnetisierbare Tinte gemäß irgendeinem der vorhergehenden Ansprüche, **dadurch gekennzeichnet, dass** die magnetisierbaren Mikropartikel und/oder Nanopartikel Nickel, Eisen oder magnetisierbare Legierungen, umfassen.

4. Magnetisierbare Tinte gemäß irgendeinem der vorhergehenden Ansprüche, **dadurch gekennzeichnet, dass** das mindestens eine Lösemittel Ethylacetat, Propylacetat, Wasser und/oder Ethyl-3-ethoxypropionat, vorzugsweise Ethylacetat, umfasst.

5. Magnetisierbare Tinte gemäß irgendeinem der vorhergehenden Ansprüche, **dadurch gekennzeichnet, dass** das mindestens eine Bindemittel Nitrocellulose umfasst.

6. Magnetisierbare Tinte gemäß irgendeinem der vorhergehenden Ansprüche, **dadurch gekennzeichnet, dass** das Bindemittel in einer Menge von 3,5 bis 12 Gew%, vorzugsweise von 10 bis 12 Gew.-%, in der magnetisierbaren Tinte enthalten ist.

7. Kunststoffformkörper, umfassend mindestens eine Oberfläche, **dadurch gekennzeichnet, dass** die mindestens eine Oberfläche mit einer magnetisierbaren Tinte gemäß irgendeinem der Ansprüche 1 bis 6 funktionalisiert ist.

8. Kunststoffformkörper gemäß Anspruch 7, **dadurch gekennzeichnet, dass** der Kunststoffformkörper einen thermoplastischen Kunststoff oder ein Elastomer, insbesondere ein thermoplastisches Elastomer, umfasst.

9. Kunststoffformkörper gemäß Anspruch 8, **dadurch gekennzeichnet, dass**
- der thermoplastische Kunststoff ausgewählt ist aus der Gruppe bestehend aus Polyethylen, ultrahochmolekularem Polyethylen (UPE), Polypropylen, Polyamid, Polyester, aromatische Polyester, Polyvinylchlorid, Polyethersulfon, Polyetheretherketon (PEEK), Ethylen-Tetrafluorethylen (ETFE), chlorierte Fluorkunststoffe (PCTFE, ECTFE), Tetrafluorethylen-Hexafluorpropylen-Vinylidenfluorid-Terpolymer (THV), Polyvinylidenfluorid (PVF), Polyvinylidendifluorid (PVDF), Perfluoralkoxy-Polymer (MFA + PFA), Tetrafluorethylen-Hexafluorpropylen-Copolymer (FEP), Polytetrafluorethylen (PTFE), sowie Mischungen und Copolymeren davon oder, dass
- das mindestens eine Elastomer ausgewählt ist aus der Gruppe bestehend aus Acrylatkautschuken (AEM), Ethylen-Vinylacetat-Kautschuken (EVA), Polybutadien (BR), Chlorsulfoniertes Polyethylen (CSM), Chloriertes Polyethylen (CM), Epichlorhydrin-Kautschuken (ECO), Chloroprenkautschuken (CR), Polyisopren (IR), Fluorkautschuk (FPM, FKM, FFKM), Styrol-Butadien-Kautschuken (SBR), Isobutylen-Isopren-Kautschuken (IIR), halogenierten Isobutylen-Isopren- Kautschuken (CIIR + BIIR), Acrylnitril-Butadien-Kautschuken (NBR), teilhydrierten oder vollständig hydrierten Acrylnitrilbutadien-Kautschuken (HNBR), Verschnitte aus NBR mit PVC (NBR-PVC), teihydrierten oder vollständig hydrierten carboxylierten Acrylnitrilbutadien-Kautschuken, Ethylen-Propylen-Dien-Kautschuken (EPDM), Ethylen-Propylen- Kautschuken (EPM), Naturkautschuk (NR), bromierten Isobutylen-Paramethylstyrol-Kautschuken, Silikonkautschuken (MVQ), sowie Mischungen, Verschnitte und Copolymeren davon und/oder, dass
- das mindestens eine thermoplastische Elastomer ausgewählt ist aus der Gruppe bestehend aus thermoplasischen Copolyamid (TPA-A), thermoplastischen Polyesterelastomer (TPE-E), Thermoplastische Elastomere auf Olefinbasis (TPE-O), Styrol-Blockcopolymere (TPE-S), Thermoplastische Elastomere auf Urethanbasis (TPE-U, TPU), Thermoplastische Vulkanisate oder vernetzte thermoplastische Elastomere auf Olefinbasis (TPE-V).

10. Kunststoffformkörper gemäß irgendeinem der Ansprüche 7 bis 9, **dadurch gekennzeichnet, dass** der Kunststoffformkörper eine Kunststofffolie umfasst, wobei mindestens eine Oberfläche der Kunststofffolie mit der magnetisierbaren Tinte funktionalisiert ist.

11. Kunststoffformkörper gemäß irgendeinem der Ansprüche 7 bis 10, **dadurch gekennzeichnet, dass** durch Faltung oder Aufrollen der Kunststoffformkörper, wobei mindestens eine Oberfläche der Kunststoffformkörper funktionalisiert ist, oder durch Aufeinanderstapelung mehrerer Kunststoffformkörper, wobei mindestens eine Oberfläche der jeweiligen Kunststoffformkörper funktionalisiert sind, ein Kunststoffformkörper, umfassend mehrere Lagen der magnetisierbaren Tinte, entsteht.

12. Verfahren zur Herstellung eines Kunststoffformkörpers gemäß irgendeinem der Ansprüche 7 bis 11, umfassend das Aufbringen einer Schicht, umfassend oder bestehend aus der magnetisierbaren Tinte gemäß irgendeinem der Ansprüche 1 bis 6, auf mindestens eine Oberfläche des Kunststoffformkörpers, **dadurch gekennzeichnet, dass**
- zunächst eine separate Schicht, umfassend oder bestehend aus der magnetisierbaren Tinte, gebildet wird und diese Schicht als Ganzes auf mindestens eine Oberfläche des Kunststoffformkörpers aufgebracht wird, oder dass
- die Schicht, umfassend oder bestehend aus der magnetisierbaren Tinte, direkt auf mindestens einer Oberfläche des Kunststoffformkörpers gebildet wird,
und die Schicht, umfassend oder bestehend aus der magnetisierbaren Tinte durch thermische Behandlung oder Bestrahlung mit dem Kunststoffformkörper verbunden wird.

13. Kunststoffformkörper, erhältlich durch das Verfahren gemäß Anspruch 12.

14. Verwendung einer magnetisierbaren Tinte gemäß irgendeinem der Ansprüche 1 bis 6 zur Funktionalisierung von Oberflächen in einer industriellen Applikation, in Automobilen oder Automobilkomponenten, insbesondere von Antriebsriemen, von Obermaterial, von einem Schlauch für gasförmige oder flüssige Medien oder von einem Federungs/Dämpfungselement und/oder Innenraumkomponenten, insbesondere zur Lokalisierung struktureller Defekte, Positionserfassung, Inkrement-Signalisierung und/oder Positionierung.

15. Verwendung eines Kunststoffformkörpers gemäß irgendeinem der Ansprüche 7 bis 11 oder Anspruch 13 als Komponente in einer industriellen Applikation oder einem Automobil, insbesondere als Antriebsriemen, als Obermaterial, als Schlauch für gasförmige oder flüssige Medien oder als Federungs/Dämpfungselement und/oder als Innenraumkomponente.

## Claims

1. Magnetisable ink for functionalising surfaces, comprising at least one magnetisable material, at least one solvent and at least one binder, and the magnetisable material comprising magnetisable microparticles and/or nanoparticles, **characterised in that** the microparticles
and/or nanoparticles are contained in the magnetizable ink in an amount of 40 to 50 % by weight, the microparticles and/or nanoparticles being flaky.

2. A magnetizable ink according to claim 1, **characterized in that** the microparticles have an average particle size of 1.5 to 15 µ m, preferably from 2.2 to 3 µ m
µ m or from 3 to 7 µ m.

3. Magnetizable ink according to any of the preceding claims, **characterized in that** the magnetizable microparticles and/or nanoparticles comprise nickel, iron or magnetizable alloys.

4. A magnetizable ink according to any of the preceding claims, **characterized in that** it comprises at least one solvent ethyl acetate, propyl acetate, water and/or ethyl-3-ethoxypropionate, preferably ethyl acetate.

5. A magnetizable ink according to any of the preceding claims, **characterized in that** it comprises at least one binder nitrocellulose.

6. A magnetizable ink according to any of the preceding claims, **characterized in that** the
binder is in an amount of 3.5 to 12 % by weight,
preferably from 10 to 12 wt .-%, in which magnetizable ink is contained.

7. Plastic moulded body, comprising at least one surface, **characterised in that** at least one surface is functionalised with a magnetisable ink according to any of claims 1 to 6.

8. A plastic moulded body according to claim 7, **characterised in that** the plastic moulded body comprises a thermoplastic plastic or an elastomer, in particular a thermoplastic elastomer.

9. Plastic molded body according to claim 8, **characterized in that** -the thermoplastic is selected from the group consisting of polyethylene, ultra-high molecular weight polyethylene (UPE), polypropylene, polyamide, polyester, aromatic polyesters, polyvinyl chloride, polyethersulfone, polyetheretherketone (PEEK), ethylene tetrafluoroethylene (ETFE), chlorinated polyester Fluoropolymers (PCTFE, ECTFE), tetrafluoroethylene-hexafluoropropylene-vinylidene fluoride terpolymer (THV), polyvinylidene fluoride (PVF), polyvinylidene difluoride (PVDF), perfluoroalkoxy polymer (MFA + PFA), tetrafluoroethylene-hexafluoropropylene copolymer (FEP), polytetrafluoroethylene (PTFE), and mixtures and copolymers thereof or that
- at least one elastomer is selected from the group consisting of acrylate rubbers (AEM), ethylene-vinyl acetate rubbers (EVA), polybutadiene (BR), chlorosulfonated polyethylene (CSM), chlorinated polyethylene (CM), epichlorohydrin rubbers (ECO), chloroprene rubbers (CR), polyisoprene (IR), fluororubber
(FPM, FKM, FFKM), styrene-butadiene rubbers (SBR), isobutylene-isoprene rubbers (IIR), halogenated isobutylene-isoprene rubbers (CIIR + BIIR), acrylonitrile butadiene rubbers (NBR), partially hydrogenated or fully hydrogenated acrylonitrile butadiene rubbers (HNBR), offcuts of NBR with PVC (NBR-PVC), teihydrogenated or fully hydrogenated carboxylated acrylonitrile butadiene rubbers,
Ethylene-propylene-diene rubbers (EPDM), ethylene-propylene rubbers (EPM), natural rubber (NR), brominated isobutylene-paramethylstyrene rubbers, silicone rubbers (MVQ), as well as mixtures, blends and copolymers thereof and/or that:
- that at least one thermoplastic elastomer is selected from the group consisting of thermoplastic copolyamide (TPA-A), thermoplastic
Polyester elastomers (TPE-E), thermoplastic olefin-based elastomers (TPE-O), styrene block copolymers (TPE-S), thermoplastic urethane-based elastomers (TPE-U, TPU), thermoplastic vulcanizates or cross-linked olefin-based thermoplastic elastomers (TPE-V).

10. Plastic moulded body according to any of claims 7 to 9, **characterised in that** the plastic moulded body comprises a plastic film wherein at least one surface of the plastic film is functionalised with the magnetisable ink.

11. Plastic moulded bodies according to any of claims 7 to 10, **characterised in that** by folding or rolling up the plastic moulded bodies, wherein at least one surface of the plastic moulded bodies is functionalised, or by stacking several plastic moulded bodies, wherein at least one
surface of the respective plastic molded bodies are functionalized, a plastic molded body comprising several layers of magnetizable ink is created.

12. A method for the manufacture of a plastic moulded body according to any of claims 7 to 11, comprising the application of a layer, comprising or
Consisting of the magnetizable ink according to any of claims 1 to 6, on at least one surface of the plastic molded body, **characterized in that**
- a separate layer, comprising or consisting of the magnetizable ink, is first formed and this layer is deposited as a whole on at least one surface of the
plastic molded body, or that
- the layer, comprising or consisting of the magnetizable ink, is formed directly on at least one surface of the plastic molded body,
and the layer, comprising or consisting of the magnetizable ink by
thermal treatment or irradiation is bonded to the plastic molded body.

13. Plastic moulded bodies obtained by the method of claim 12.

14. Use of a magnetizable ink according to any of claims 1 bis
6 for the functionalization of surfaces in an industrial application, in automobiles or automotive components, in particular of drive belts, of upper material, of a hose for gaseous or liquid media or of a suspension/damping element and/or interior components, in particular for localization of structural defects, position detection, increment signaling
and/or positioning.

15. Use of a plastic moulded body according to any of claims 7 bis
11 or claim 13 as a component in an industrial application or automobile, in particular as a
drive belt, as an upper material, as a hose for
gaseous or liquid media or as a suspension/damping element and/or as an interior component.

## Revendications

1. Encre magnétisable pour fonctionner des surfaces, comprenant au moins un matériau magnétisable, au moins un solvant et au moins un liant, ainsi que le matériau magnétisable comprenant des microparticules et/ou nanoparticules magnétisables, **caractérisées par le fait que** les microparticules
et/ou nanoparticules sont contenues dans l'encre magnétisable en une quantité de 40 à 50 % en poids, les microparticules et/ou nanoparticules étant flocones.

2. Une encre magnétisable selon la revendication 1, **caractérisée par le fait que** les microparticules ont une taille moyenne de particules de 1,5 à 15 µ m, de préférence de 2,2 à 3 µ m
µ m ou de 3 à 7 µ m.

3. Encre magnétisable selon toutes les revendications précédentes, **caractérisée par le fait que** les microparticules et/ou nanoparticules magnétisables sont composées de nickel, de fer ou d'alliages magnétisables.

4. Une encre magnétisable selon l'une des revendications précédentes, **caractérisée par** la composition d'au moins un solvant d'acétate d'éthyle, d'acétate de propyle, d'eau et/ou d'éthyle-3-éthoxypropionate, de préférence acétate d'éthyle.

5. Une encre magnétisable selon toutes les affirmations précédentes, **caractérisée par** la présence d'au moins un liant de nitrocellulose.

6. Une encre magnétisable selon toutes les revendications précédentes, **caractérisée par le**
**fait que** le classeur est en une quantité de 3,5 à 12 % en poids,
de préférence de 10 à 12 en poids, %, où l'encre magnétisable est contenue.

7. Corps moulé en plastique, comprenant au moins une surface, **caractérisé par le fait qu'**au moins une surface est fonctionnalisée avec une encre magnétisable selon l'une des revendications 1 à 6.

8. Un corps moulé en plastique selon la revendication 7, **caractérisé par le fait que** le corps moulé en plastique est composé d'un plastique thermoplastique ou d'un élastomère, en particulier un élastomère thermoplastique.

9. Corps moulé en plastique selon l'affirmation 8, **caractérisé en ce que** - le thermoplastique est sélectionné parmi le groupe composé de polyéthylène, polyéthylène ultra-haut poids moléculaire (UPE), polypropylène, polyamide, polyester, polyesters aromatiques, polychlorure de vinyle, polyéthérsulfone, polyéthéréthéréthérène (PEEK), tétrafluoroéthylène (ETFE), polyester chloré fluoropolymères (PCTFE, ECTFE), tétrafluoroéthylène-hexafluoropropylène-vinylidène fluorure terpolymère (THV), polyvinylidène fluorure (PVF), polyvinylidène difluorure (PVDF), polymère perfluoroalkoxy (MFA + PFA), copolymère tétrafluoroéthylène-hexafluoropropylène (FEP), polytétrafluoroéthylène (PTFE), ainsi que leurs mélanges et copolymères ou que
- au moins un élastomère est sélectionné parmi le groupe comprenant des caoutchoucs acrylate (AEM), des caoutchoucs d'éthylène-acétate de vinyle (EVA), du polybutadiène (BR), du polyéthylène chlorosulfoné (CSM), du polyéthylène chloré (CM), des caoutchoucs épichlorohydrine (ECO), des caoutchoucs au chloroprène (CR), du polyisoprène (IR), du fluorocaoutchouc
caoutchoucs (FPM, FKM, FFKM), caoutchoucs de styrène-butadiène (SBR), caoutchoucs isobutylène-isoprène (IIR), caoutchoucs isobutylène-isoprène halogénés (CIIR + BIIR), caoutchoucs acrylonitrile butadiène (NBR), caoutchoucs acrylonitrile butadiène partiellement hydrogénés ou entièrement hydrogénés (HNBR), découpes de NBR avec PVC (NBR-PVC), caoutchoucs carbooxylés acrylonitril butadiène teihydrogénés ou entièrement hydrogénés, caoutchoucs éthylène-propylène-diène (EPDM), caoutchoucs éthylène-propylène (EPM), caoutchoucs naturels (NR), caoutchoucs bromés isobutylène-paraméthylstyrène, caoutchoucs siliconés (MVQ), ainsi que des mélanges, mélanges et copolymères de ceux-ci et/ou que :
- qu'au moins un élastomère thermoplastique soit sélectionné parmi le groupe constitué de copolyamide thermoplastique (TPA-A), thermoplastique
Élastomères polyesters (TPE-E), élastomères à base d'oléfines thermoplastiques (TPE-O), copolymères blocs de styrène (TPE-S), élastomères à base d'uréthane thermoplastique (TPE-U, TPU), vulcanizates thermoplastiques ou élastomères thermoplastiques à base d'oléfines réticulés (TPE-V).

10. Corps moulé en plastique selon l'une des revendications 7 à 9, **caractérisé par le fait que** le corps moulé en plastique est constitué d'un film plastique dans lequel au moins une surface du film plastique est fonctionnalisée avec l'encre magnétisable.

11. Les carrosseries moulées en plastique selon l'une des revendications 7 à 10, **caractérisées par** le pliage ou le roulement des corps moulés en plastique, où au moins une surface des carrosseries moulées en plastique est fonctionnalisée, ou par l'empilement de plusieurs carrosseries moulées en plastique, où au moins une
surfaces des corps moulés en plastique sont fonctionnalisées, un corps moulé en plastique composé de plusieurs couches d'encre magnétisable est créé.

12. Une méthode de fabrication d'un corps moulé en plastique selon l'une des revendications 7 à 11, comprenant l'application d'une couche, comprenant ou Constitué de l'encre magnétisable selon l'une des revendications 1 à 6, sur au moins une surface du corps moulé en plastique, caractérisé en
- une couche distincte, composée ou constituée de l'encre magnétisable, est d'abord formée et cette couche est déposée dans son ensemble sur au moins une surface du
carrosseries en plastique moulé, ou ça
- la couche, composée ou constituée de l'encre magnétisable, est formée directement sur au moins une surface du corps moulé en plastique,
et la couche, composée ou constituée de l'encre magnétisable par
traitements thermiques ou irradiation sont fixés au corps moulé en plastique.

13. Carrosseries moulées en plastique obtenues par la méthode de la revendication 12.

14. Utilisation d'une encre magnétisable selon l'une des revendications 1 bis
6 pour la fonctionnisation des surfaces dans une application industrielle, dans l'automobile ou les composants automobiles, en particulier des courroies d'entraînement, du matériau supérieur, d'un tuyau pour milieux gazeux ou liquides ou d'un élément de suspension/amortissement et/ou de composants intérieurs, en particulier pour la localisation de défauts structurels, la détection de position, la signalisation par incréments
et/ou positionnement.

15. Utilisation d'un corps moulé en plastique selon l'une des revendications 7 bis
11 ou revendication 13 comme composant dans une application industrielle ou automobile, en
particulier comme courroie d'entraînement, comme matériau supérieur, comme tuyau pour milieux gazeux ou liquides ou comme élément de suspension/amortissement et/ou comme composant intérieur.
